# EUROPEAN PATENT APPLICATION

(11) **EP 3 960 810 A1**
(43) Date of publication of application: **02.03.2022**
(21) Application number: 20795400.9
(22) Date of filing: 16.04.2020
(51) Int. Cl.: C08L 1/08, C08K 3/08, C08B 5/14

(54) **CELLULOSE NANOCRYSTAL COMPOSITE AND PRODUCTION METHOD THEREFOR**

(30) Priority: 25.04.2019 JP 2019084560
(71) Applicant: Toyo Seikan Group Holdings, Ltd., Shinagawa-ku Tokyo 141-8627 (JP)
(72) Inventor: NAGAHAMA, Hideaki, Yokohama-shi, Kanagawa 240-0062 (JP); KINOSHITA, Yuuki, Yokohama-shi, Kanagawa 240-0062 (JP)
(74) Representative: J A Kemp LLP
(86) International application number: PCT/JP2020/016721
(87) International publication number: WO 2020/218152

(57) **Abstract**

The present invention relates to a cellulose nanocrystal composite containing a sulfuric acid group and/or a sulfo group and an anionic functional group, and supporting fine metal particles. Since the composite containing the sulfuric acid group and/or the sulfo group and the anionic functional group in total of more than 0.17 mmol/g and not more 4.0 mmol/g contains a large amount of anionic functional group capable of supporting the fine metal particles, the composite is capable of supporting the fine metal particles efficiently and stably, and the composite is excellent in handleability since it is capable of preventing or decreasing thickening and thixotropy of the dispersion liquid.

## Description

### Technical Field:

The present invention relates to a cellulose nanocrystal composite supporting fine metal particles, and a method for producing the same. More particularly, the present invention relates to a cellulose nanocrystal composite having favorable stability and efficiency in supporting fine metal particles and further having excellent viscosity and dispersibility when used in the form of a dispersion liquid, and a method for producing the same.

### Background Art:

It has been proposed to use nanocellulose as an advanced biomass feedstock for various applications such as functional additives and film composite materials. In particular, cellulose nanofibers disclosed in Patent Document 1 or the like have been applied to various fields. The cellulose nanofibers are prepared by subjecting a cellulose material to a mechanical treatment for miniaturization and a chemical treatment for substitution-introduction of hydrophilic functional groups such as carboxyl groups or phosphoric acid groups into the hydroxyl groups of the cellulose. The cellulose nanofibers serve to reduce energy for the miniaturization and to improve dispersibility with respect to the aqueous solvents and transparency of the dispersion liquid.

Fine metal particles, particularly ultrafine metal particles having a particle diameter of not more than 100 nm, have properties largely different from those of ordinary metal particles, and the fine particles have high surface activity and a large surface area. For this reason, the fine or ultrafine metal particles have been proposed for use in various fields as a colorant, an antibacterial agent, a catalyst, an adsorbent or the like. However, since the ultrafine metal particles tend to aggregate, it is necessary to maintain a state in which the ultrafine metal particles are uniformly dispersed in order to efficiently exhibit the excellent properties thereof.

As a support for the ultrafine metal particles, a combination with the aforementioned cellulose nanofibers has been proposed.

For instance, Patent Document 2 below discloses a composite comprising (A) a cellulose nanofiber having a carboxyl group or a carboxylate group on a surface thereof and (B) metallic nanoparticles, wherein the metallic nanoparticles (B) are carried by the cellulose nanofibers via the carboxyl group or the carboxylate group as a contact point.

Patent Document 3 below discloses an antibacterial fine cellulose formed of fine cellulose derived from wood, on which metal microparticles of silver or its compound are supported. The fine cellulose has a carboxyl group at least on its crystal surface, and the metal microparticles are precipitated on the carboxyl group on the crystal surface of the fine cellulose.

### Prior art documents:

### Patent Documents:

[Patent Document 1] Japanese Patent JP 4998981 B
[Patent Document 2] Japanese Patent JP 5566368 B
[Patent Document 3] Japanese Patent JP 6260077 B

### Summary of the invention:

### Problem to be solved by the invention:

The cellulose nanofibers used in Patent Documents 2 and 3 are chemically treated using TEMPO catalysts. Since the cellulose nanofibers have a long fiber length, and dispersion liquids thereof exhibit high viscosity and great thixotropy, and the liquid may be thickened easily. The handleability like coating applicability and application touch is still unsatisfactory. This may hinder the fine metal particles from exhibiting suitably and efficiently their excellent properties.

In addition to that, ultrafine metal particles tend to aggregate and when dried, the particles may easily desorbed from the object. Therefore, for allowing the ultrafine metal particles to exhibit efficiently the excellent properties, it is necessary to disperse the ultrafine metal particles uniformly and couple to a support for imparting properties such as dispersibility and fixability. In order to allow the fine metal particles to exhibit further effectively the performance, it is also necessary to allow the nanocellulose to support efficiently and stably a larger amount of fine metal particles.

Accordingly, it is an object of the present invention to provide a cellulose nanocrystal composite that contains a large amount of anionic functional group capable of supporting the fine metal particles, such that the cellulose nanocrystal composite can support efficiently and stably the fine metal particles. Furthermore, the cellulose nanocrystal composite is capable of preventing or decreasing thickening or thixotropy of the dispersion liquid, and it is excellent in handleability. The present invention provides also a method for producing the cellulose nanocrystal composite.

Another object of the present invention is to provide a dispersion liquid having excellent transparency in which the cellulose nanocrystal composite supporting the fine metal particles is dispersed uniformly, and a product containing the cellulose nanocrystal composite supporting the fine metal particles, and capable of efficiently exhibiting performance like antibacterial performance derived from the fine metal particles.

### Means for Solving the Problems:

The present invention provides a cellulose nanocrystal composite containing a sulfuric acid group and/or a sulfo group and an anionic functional group, and supporting fine metal particles. The total amount of the sulfuric acid group and/or the sulfo group and the anionic functional group is more than 0.17 mmol/g and not more than 4.0 mmol/g.

It is suitable for the cellulose nanocrystal composite of the present invention that:
1. the sulfuric acid group and/or the sulfo group is a sulfuric acid group and/or a sulfo group derived from a sulfuric acid treatment of cellulose nanocrystal;
2. the anionic functional group is at least one of a sulfuric acid group and/or a sulfo group derived from a hydrophilization treatment, a phosphoric acid group or a carboxyl group;
3. the anionic functional group is a sulfuric acid group and/or a sulfo group, or a phosphoric acid group; and
4. the cellulose nanocrystal has a fiber width of not more than 50 nm, a fiber length of not more than 500 nm, and crystallinity of not less than 60%.

The present invention provides also a cellulose nanocrystal composite dispersion liquid comprising the cellulose nanocrystal composite dispersed in a protic polar solvent.

It is suitable for the cellulose nanocrystal composite dispersion liquid that the dispersion liquid containing 1 mass% of cellulose nanocrystal composite has a viscosity of not more than 1000 mPa·S at 20°C and a rotational frequency of 2.5 rpm.

The present invention further provides a product containing the cellulose nanocrystal composite.

Further, the present invention provides a method for producing a cellulose nanocrystal composite. The method comprises: treating a cellulose material with sulfuric acid to prepare cellulose nanocrystal containing a sulfuric acid group and/or a sulfo group; subjecting the cellulose nanocrystal to a hydrophilization treatment to prepare cellulose nanocrystal containing a sulfuric acid group and/or a sulfo group and an anionic functional group; and allowing the cellulose nanocrystal to support fine metal particles.

It is suitable in the method for producing the cellulose nanocrystal composite of the present invention that the hydrophilization treatment is a never-dry process or a treatment using any one of carbodiimide, sulfuric acid, a sulfur trioxide-pyridine complex, or phosphoric acid-urea.

### Effect of the invention:

Since the cellulose nanocrystal composite of the present invention comprises cellulose nanocrystal containing a sulfuric acid group and/or a sulfo group each having a high polarity and an anionic functional group such as a divalent phosphoric acid group within the aforementioned ranges, the efficiency for supporting fine metal particles and stability can be improved. Furthermore, since the cellulose nanocrystal itself has favorable dispersibility with respect to a dispersion medium, the fine metal particles can be dispersed uniformly and stably in the dispersion liquid without aggregation.

Since the cellulose nanocrystal is formed of short thin fibers unlike cellulose nanofibers, increase in viscosity (thickening) and thixotropy of the dispersion liquid can be prevented or decreased. In addition, the cellulose nanocrystal has excellent transparency.

Since the increase in the viscosity and the thixotropy of the dispersion liquid is prevented or decreased, the cellulose nanocrystal composite of the present invention is excellent in handleability such as coating applicability and application touch, and thus, it can be used to favorably form a product containing the cellulose nanocrystal composite supporting the fine metal particles.

In the cellulose nanocrystal containing the anionic functional group within the aforementioned range, the fibers tend to be separated from each other due to charge repulsion among the nanocelluloses. Due to this property, the cellulose nanocrystal composite of the present invention has a favorable dispersibility even in a protic solvent other than water (e.g., an alcohol). As a result, it has an affinity also for hydrophobic resins. Furthermore, since the time for drying and heating can be decreased, the formability is also excellent.

### Brief description of the drawings:

[Fig. 1] is an SPM image of fine silver particles and hydrophilized cellulose nanocrystal after spin-coating a composite obtained in Example 1 on a silicon wafer (300 nm scan) ;
[Fig. 2] is an SPM image of fine silver particles and cellulose nanocrystal after spin-coating a composite obtained in Comparative Example 1 on a silicon wafer (1 µm scan);
[Fig. 3] is an SPM image of fine silver particles and cellulose nanofibers after spin-coating a composite obtained in Comparative Example 2 on a silicon wafer (1 µm scan);
[Fig. 4] is a graph showing the viscosity of the composite obtained in Example 1 after increasing and then decreasing the rotational frequency; and

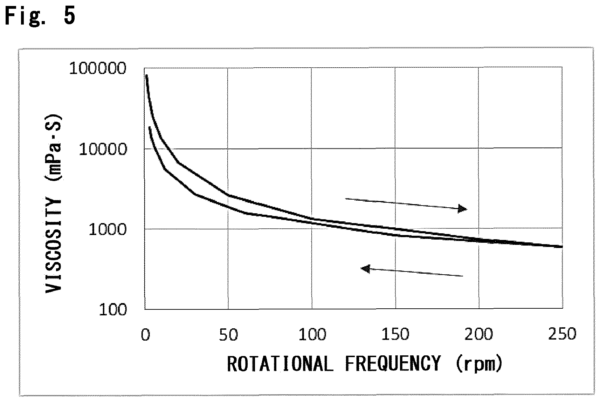

[Fig. 5] is a graph showing the viscosity of a composite obtained in Comparative Example 3 after increasing and then decreasing the rotational frequency.

### Mode for carrying out the invention:

### (Cellulose nanocrystal)

The cellulose nanocrystal used in the present invention contains a sulfuric acid group and/or a sulfo group and an anionic functional group. An important feature thereof is that the total amount of the sulfuric acid group and/or the sulfo group and the anionic functional group is more than 0.17 mmol/g and not more than 4.0 mmol/g, particularly in the range of 0.25 to 1.5 mmol/g.

When the total amount of the sulfuric acid group and/or the sulfo group and the anionic functional group is smaller than this range, the charge repulsion of the nanocellulose is lowered, and the dispersibility of the cellulose nanocrystal deteriorates, unlike the case where the total amount is within the range. In addition, the desired performance for supporting the fine metal particles may not be obtained. When the total amount of the sulfuric acid group and/or the sulfo group and the anionic functional group exceeds the range, the nanocellulose cannot maintain its crystal structure, and thus, the excellent performance inherent to the cellulose nanocrystal such as crystallinity, strength and gas-barrier properties may be impaired.

In the present invention, the "anionic functional group" contained in the cellulose nanocrystal indicates an anionic functional group introduced into the cellulose nanocrystal by the hydrophilization treatment. In some cases, a sulfuric acid group and/or a sulfo group may be further introduced as an anionic functional group by hydrophilization treatment as described below. In such a case, the cellulose nanocrystal contains only a sulfuric acid group and/or a sulfo group that includes the "anionic functional group".

It is preferable in the present invention that the cellulose nanocrystal is obtained by hydrolysis with sulfuric acid, because the thus obtained cellulose nanocrystal contains a sulfuric acid group and/or a sulfo group having high cation exchange ability and capable of efficiently supporting a metal. In other words, acid hydrolysis of cellulose nanocrystals is usually carried out by either a sulfuric acid treatment or a hydrochloric acid treatment. However, since cellulose nanocrystal treated with hydrochloric acid does not contain a sulfuric acid group and/or a sulfo group, it has an inferior capacity for supporting fine metal particles in comparison with cellulose nanocrystal treated with sulfuric acid. Furthermore, the dispersibility of the cellulose nanocrystal having the sulfuric acid group and/or the sulfo group in a protonic solvent can be improved due to the charge repulsion of the nanocellulose, as mentioned above.

The anionic functional group possessed by the cellulose nanocrystal is determined by a method for hydrophilization treatment of the cellulose nanocrystal described below, and particularly suitable examples thereof include a carboxyl group, a phosphoric acid group, a sulfuric acid group and/or a sulfo group.

In this specification, the term "sulfuric acid group" represents a concept including a sulfate group.

In the present invention, the cellulose nanocrystal to support the fine metal particles can be produced by: treating a cellulose material with sulfuric acid to prepare cellulose nanocrystal containing a sulfuric acid group and/or a sulfo group; and hydrophilizing the cellulose nanocrystal. Before and/or after the hydrophilization treatment, the cellulose nanocrystal can be subjected to a defibration treatment and a dispersion treatment, if necessary.

### [Cellulose nanocrystal]

The cellulose nanocrystal used as the material of nanocellulose in the present invention comprises rod-like cellulose crystalline fibers. This cellulose nanocrystal is obtained by subjecting cellulose fibers such as pulp to an acid hydrolysis treatment using sulfuric acid or hydrochloric acid. In the present invention, cellulose nanocrystal obtained by a sulfuric acid treatment is used, because the cellulose nanocrystal has a sulfuric acid group and/or a sulfo group capable of contributing to formation of the self-assembled structure.

The cellulose nanocrystal preferably contains a sulfuric acid group and/or a sulfo group in an amount of 0.01 to 0.17 mmol/g. The cellulose nanocrystal that can be suitably used may have an average fiber diameter of not more than 50 nm, particularly in the range of 2 to 50 nm; an average fiber length in the range of 100 to 500 nm; an aspect ratio in the range of 5 to 50; and crystallinity of not less than 60%, particularly not less than 70%.

The cellulose nanocrystal of the present invention, which contains a sulfuric acid group and/or a sulfo group and an anionic functional group within the aforementioned ranges, is obtained by subjecting cellulose nanocrystal having a sulfuric acid group and/or a sulfo group to a hydrophilization treatment described later. Alternatively, cellulose nanofibers produced by a conventional oxidation process and having a fiber width of not more than 50 nm and an aspect ratio of not less than 10 may be contained within a range not to impair the excellent barrier properties and handleability of the nanocellulose of the present invention. Specifically, the cellulose nanofibers can be contained in an amount of less than 50% of the cellulose nanocrystal.

### [Hydrophilization treatment]

In the present invention, the hydrophilization treatment of the cellulose nanocrystal having a sulfuric acid group and/or a sulfo group is conducted in order to adjust the amount of the sulfuric acid group and/or the sulfo group, or to introduce an anionic functional group such as a carboxyl group or a phosphoric acid group into a hydroxyl group of the cellulose, thereby preparing nanocellulose that contains an anionic functional group such as a sulfuric acid group and/or a sulfo group, a carboxyl group, or a phosphoric acid group in a total amount of more than 0.17 mmol/g and not more than 4.0 mmol/g, and in particular in the range of 0.25 to 1.5 mmol/g.

For the hydrophilization treatment, a never-dry process or a treatment using any of water-soluble carbodiimide, sulfuric acid, a sulfur trioxide-pyridine complex, phosphoric acid-urea, a TEMPO catalyst, or an oxidant, is conducted. Specifically, the hydrophilization treatment is conducted by the never-dry process or a treatment using any of carbodiimide, sulfuric acid or a sulfur trioxide-pyridine complex so as to adjust the amount of the sulfuric acid group and/or the sulfo group in the cellulose nanocrystal, and the fiber length of the nanocellulose is further decreased. A treatment using any one of the phosphoric acid-urea, the TEMPO catalyst or the oxidant serves to introduce an anionic functional group, namely a phosphoric acid group or a carboxyl group, so as to adjust the total amount of the anionic functional group in the nanocellulose within the aforementioned range.

Any one of the treatments may be conducted for hydrophilization treatment as long as the total amount of the anionic functional groups is within the range. Alternatively, one of the treatments can be conducted plural times alone or in combination with any other treatment.

### <Hydrophilization treatment using never-dry process>

The cellulose nanocrystal is solidified to make a powder or the like through a drying treatment such as spray drying, heating and depressurization. During the solidification by drying, a part of the anionic functional groups contained in the cellulose nanocrystal is eliminated so that the hydrophilicity deteriorates. That is, since the never-dry process does not cause solidification to make the powder or the like of the cellulose nanocrystal containing the anionic functional group, it may be regarded as a hydrophilization treatment. Examples of the anionic functional group include a sulfuric acid group and/or a sulfo group, a phosphoric acid group, and a carboxyl group.

It is possible to conduct the never-dry process alone. Namely, the cellulose nanocrystal to be used, which contains a sulfuric acid group and/or a sulfo group, is not solidified. Alternatively, the never-dry process can be conducted in combination with a hydrophilization treatment using any of carbodiimide, sulfuric acid, a sulfur trioxide-pyridine complex, phosphoric acid-urea, or a TEMPO catalyst.

### <Hydrophilization treatment using carbodiimide>

In the treatment using carbodiimide, the cellulose nanocrystal and the carbodiimide are stirred in a solvent such as dimethylformamide, and sulfuric acid is added thereto for a reaction at a temperature in a range of 0 to 80°C for 5 to 300 minutes, thereby obtaining a sulfuric ester. The carbodiimide and the sulfuric acid are preferably used in amounts of 5 to 30 mmol and 5 to 30 mmol respectively per gram of the cellulose nanocrystal (solid content).

Subsequently, an alkaline compound such as sodium hydroxide is added thereto to convert the sulfuric acid group and/or the sulfo group that has been introduced into the cellulose nanocrystal from H-form to Na-form preferably for improving the yield. Later, filtration with a dialysis membrane or the like is conducted to remove impurities and the like, thereby preparing cellulose nanocrystal with modified sulfuric acid group and/or sulfo group.

An example of the carbodiimide that can be used here is 1-ethyl-3-(3-dimethylaminopropyl)carbodiimide, which is a water-soluble compound having a carbodiimide group (-N=C=N-) in its molecules. It is also possible to use dicyclohexylcarbodiimide or the like, which is dissolvable in an organic solvent.

### <Hydrophilization treatment using sulfuric acid>

The cellulose nanocrystal used in the present invention contains a sulfuric acid group and/or a sulfo group, and this cellulose nanocrystal is prepared by subjecting cellulose fibers to a hydrolysis treatment using sulfuric acid. This cellulose nanocrystal is further subjected to a hydrophilization treatment using sulfuric acid. The sulfuric acid is preferably used in an amount of 40 to 60% by mass per gram of the cellulose nanocrystal (solid content) . As a result of reaction at a temperature of 40 to 60°C for 5 to 300 minutes and the following filtration treatment using a dialysis membrane or the like to remove impurities or the like, a sulfuric acid group and/or sulfo group-modified cellulose nanocrystal is prepared.

### <Hydrophilization treatment using sulfur trioxide-pyridine complex>

In the treatment using the sulfur trioxide-pyridine complex, the cellulose nanocrystal is allowed to react with the sulfur trioxide-pyridine complex in dimethyl sulfoxide for 5 to 240 minutes at a temperature in a range of 0 to 60°C so as to introduce the sulfuric acid group and/or the sulfo group into the hydroxyl group of the cellulose glucose unit.

The sulfur trioxide-pyridine complex is preferably formulated in mass from 0.5 to 4 g per gram of the cellulose nanocrystal (solid content).

After the reaction, preferably an alkaline compound such as sodium hydroxide is added to convert the sulfuric acid group and/or the sulfo group that has been introduced into the cellulose nanocrystal from H-form to Na-form in order to improve the yield. Thereafter, dimethylformamide or isopropyl alcohol is added. After washing by centrifugation or the like, impurities and the like are removed by a filtration treatment using a dialysis membrane or the like, and the thus obtained concentrate is dispersed in water, whereby a sulfuric acid group and/or a sulfo group-modified cellulose nanocrystal is prepared.

### <Hydrophilization treatment using phosphoric acid-urea>

The hydrophilization treatment using phosphoric acid-urea can be conducted in the same manner as in the conventionally known treatment of introducing a phosphoric acid group by use of phosphoric acid-urea. Specifically, cellulose nanocrystal is made react with a phosphoric acid group-containing compound in the presence of a urea-containing compound for 5 to 120 minutes at a temperature in a range of 135 to 180°C, whereby the phosphoric acid group is introduced into a hydroxyl group of a cellulose glucose unit.

Examples of the phosphoric acid group-containing compound include phosphoric acid, a lithium salt of phosphoric acid, a sodium salt of phosphoric acid, a potassium salt of phosphoric acid, and an ammonium salt of phosphoric acid. Among them, sodium dihydrogen phosphate, ammonium dihydrogen phosphate, phosphoric acid or the like can be suitably used alone or as a mixture. The phosphoric acid group-containing compound is preferably added in an amount of 10 to 100 mmol relative to 10 g (solid content) of the cellulose nanocrystal.

Examples of the urea-containing compound include urea, thiourea, burette, phenylurea, benzyl urea, and dimethyl urea. Among them, urea can be suitably used. The urea-containing compound is preferably used in an amount of 150 to 200 mmol relative to 10 g (solid content) of the cellulose nanocrystal.

### <Hydrophilization treatment using TEMPO catalyst>

The hydrophilization treatment using a TEMPO catalyst (2,2,6,6-tetramethylpiperidine 1-oxyl) can be conducted in the same manner as in any of conventionally known oxidation methods using a TEMPO catalyst. Specifically, in the hydrophilization reaction of a cellulose nanocrystal having a sulfuric acid group and/or a sulfo group, a hydroxyl group at the 6-position of a cellulose glucose unit is oxidized to a carboxyl group via the TEMPO catalyst (2,2,6,6-tetramethylpiperidine 1-oxyl) under conditions of an aqueous system, an ordinary temperature, and an ordinary pressure.

The 2,2,6,6-tetramethylpiperidine 1-oxyl used as the TEMPO catalyst can be replaced by a derivative of TEMPO, such as 4-acetamido-TEMPO, 4-carboxy-TEMPO, or 4-phosphonoxy-TEMPO.

The use amount of TEMPO catalyst is set to a range of 0.01 to 100 mmol, preferably 0.01 to 5 mmol per gram of the cellulose nanocrystal (solid content).

In the hydrophilization treatment, the TEMPO catalyst may be used alone or together with an oxidant or a co-oxidant such as a bromide or an iodide.

Examples of the oxidant include known oxidants such as halogen, hypohalous acid, halous acid, perhalogenic acid or salts thereof, halogen oxide and peroxide. Sodium hypochlorite or sodium hypobromite can be used particularly preferably. The amount of oxidant is set to a range of 0.5 to 500 mmol, preferably 5 to 50 mmol per gram of the cellulose nanocrystal (solid content). After a certain period of time from addition of the oxidant, an additional oxidation treatment can be conducted by incorporating a further oxidant.

As the co-oxidant, an alkali metal bromide such as sodium bromide, or an alkali metal iodide such as sodium iodide can be suitably used. The amount of co-oxidant is set to a range of 0.1 to 100 mmol, preferably 0.5 to 5 mmol per gram of the cellulose nanocrystal (solid content).

Further, it is preferable that the reaction medium of the reaction solution is water or an alcohol solvent.

The reaction temperature in the hydrophilization treatment ranges from 1 to 50°C, particularly from 10 to 50°C, and it may be room temperature. The reaction time is in a range of 1 to 360 minutes, and particularly preferably from 60 to 240 minutes.

As the reaction proceeds, carboxyl groups are formed in the cellulose, and this may lower the pH of the slurry. In order to efficiently make the oxidation reaction proceed, it is desirable to maintain the pH in the range of 9 to 12 using a pH-adjusting agent such as sodium hydroxide.

After the oxidation treatment, the catalyst and the like used in the treatment are removed by washing with water or the like.

### [Defibration treatment]

In the present invention, it is also possible to conduct a defibration treatment after the hydrophilization treatment, though this is not obligatory because the present invention uses cellulose nanocrystal having a short fiber length as the material.

The defibration treatment can be conducted by any of conventionally-known methods, for instance, using an ultrahigh-pressure homogenizer, an ultrasound homogenizer, a grinder, a high-speed blender, a bead mill, a ball mill, a jet mill, a disassembler, a beater or a biaxial extruder.

The defibration treatment can be conducted in either dry or wet process, depending on the conditions of the nanocellulose after the hydrophilization treatment or use of the nanocellulose. Since the nanocellulose is suitably used as a dispersion liquid, it is suitable to defibrate with an ultrahigh-pressure homogenizer or the like using water or the like as a dispersion medium.

### [Dispersion treatment]

As described below, it is suitable for the cellulose nanocrystal composite of the present invention that the cellulose nanocrystal in the form of dispersion liquid is mixed with a metal compound capable of donating fine metal particles. Therefore, the cellulose nanocrystal is preferably subjected to a dispersion treatment.

In the dispersion treatment, a dispersing machine such as an ultrasonic disperser, a homogenizer, or a mixer can be suitably used. Alternatively, stirring with a stirring bar, a stirring stone or the like can be conducted therefor.

### (Fine metal particles)

There is no particular limitation on the type of metal for the particles that are supported by the cellulose nanocrystal composite of the present invention, but any metal can be selected suitably with reference to desired actions and effects thereof, such as antibacterial performance, adsorption performance, and catalytic performance. The examples include Cu, Ag, Au, In, Pd, Pt, Fe, Ni, Co, Zn, Nb, Sn, Ru, Rh and Ti, though the present invention is not limited to these examples. The fine metal particles to be supported may comprise a single metal, an alloy, or plural kinds of metals.

The fine metal particles suitably have an average primary particle diameter of not more than 50 nm, and particularly in the range of 5 to 20 nm, though the present invention is not limited to the range, whereby the fine metal particles can be supported densely and stably on the cellulose nanocrystal surface, and the function derived from the fine metal particles can be efficiently exhibited.

### (Method for producing cellulose nanocrystal composite)

The cellulose nanocrystal composite of the present invention, which supports the fine metal particles, is manufactured by the aforementioned method including: treating a cellulose material with sulfuric acid to obtain cellulose nanocrystal containing a sulfuric acid group and/or a sulfo group; hydrophilizing the cellulose nanocrystal so that the total amount of the sulfuric acid group and/or the sulfo group and the anionic functional group is more than 0.17 mmol/g and not more than 4.0 mmol/g; and allowing the sulfuric acid group and/or the sulfo group and the anionic functional group like a phosphoric acid group on the cellulose nanocrystal surface to interact with metallic cation so as to support the fine metal particles.

Here, the cellulose nanocrystal containing the sulfuric acid group and/or the sulfo group and the anionic functional group is made support the fine metal particles in the following manner. A dispersion liquid of the cellulose nanocrystal containing the sulfuric acid group and/or the sulfo group and the anionic functional group is mixed with a solution containing a metal compound, and later, the metal compound is reduced to provide cellulose nanocrystal supporting the fine metal particles.

The aforementioned solution preferably contains a metal ion or a metal compound such as a halide, a nitrate, or an acetate. Although the concentration of the metal ion or the metal compound in the solution is not limited in particular, it is contained preferably in an amount of 0.01 to 10 parts by mass relative to 100 parts by mass of the cellulose nanocrystal.

After mixing the cellulose nanocrystal dispersion liquid and the metal compound solution, the metal compound is reduced to precipitate fine metal particles, whereby a dispersion liquid of the cellulose nanocrystal composite supporting the fine metal particles can be prepared.

The metal compound can be reduced by any well-known method, but preferably coupling between the metal compound and the anionic functional group is not hindered in reducing the metal compound. Examples of the method for reduction include a gas phase reduction using hydrogen and a liquid phase reduction using a reducing agent. Among them, the liquid phase reduction using a reducing agent is preferred since the method can be applied easily to a mixture of the cellulose nanocrystal dispersion liquid and the metal compound solution.

Examples of the reducing agent include metal hydrides such as sodium borohydride, potassium borohydride, lithium aluminum hydride, sodium cyanoborohydride, lithium aluminum trialkoxyhydride, and aluminum diisobutyl hydride, though the present invention is not limited to these examples. Among them, sodium borohydride can be suitably used from the viewpoint of safety, versatility or the like.

Although it is difficult to precisely determine the amount of the reducing agent to be added because the amount may vary depending on the kinds of metal or the like of the metal compound, it is desirably added to be 1-10 equivalents per equivalent of the metal compound.

The dispersion liquid, which contains a cellulose nanocrystal composite supporting the fine metal particles, has a viscosity of not more than 1000 mPa·s, particularly in the range of 1 to 100 mPa·s (rotary viscometer, temperature: 20°C) at a rotational frequency of 2.5 rpm when the concentration of the cellulose nanocrystal composite is 1% by mass. Since the cellulose nanocrystal is thin and short, namely, the fiber width is not more than 50 nm and the fiber length is not more than 500 nm, thickening and thixotropy are prevented or decreased, and thus, the handleability like dispersibility, coating applicability, application touch, or drying is excellent.

Thickening is a phenomenon expressed by a polymer that is dissolved or dispersed in water to impart viscosity, and a chemical derivative or the like of polysaccharides or a cellulose is usually used. Thickening greatly affects handleability of a dispersion liquid. Specifically, a less thickened dispersion liquid requires less time and energy for a dilution and dispersion treatment into another dispersion liquid, and the dispersion liquid with less viscosity is preferred from the viewpoint of handleability such as coating applicability, application touch and drying. The thixotropy of the dispersion liquid can be observed as a loop of 'shear rate' - 'shear stress' formed by the hysteresis loop measurement in which the shear rate such as the rotational frequency is increased, and then, decreased. It is possible to evaluate the degree of thixotropy of the dispersion liquid by comparing the loop areas. When a thixotropic dispersion liquid is repeatedly applied with shearing, the viscosity will be decreased to cause viscosity lowering at the time of coating or application. Moreover, the coating applicability and application touch may change due to the shear stimulus applied before use. Therefore, prevention of the thixotropy is effective in decreasing the change in the coating applicability and the application touch.

The thus obtained cellulose nanocrystal composite dispersion liquid containing 1% by mass of the cellulose nanocrystal composite (solid content) has excellent transparency, namely, the total light transmittance at a wavelength of 750 nm is 50%T or more.

It is also possible to formulate any well-known additive in the cellulose nanocrystal composite dispersion liquid of the present invention, and the examples of the additive include a filler, a colorant, an ultraviolet absorber, an antistatic agent, a water-resistant agent, a crosslinking agent, a metal salt, colloidal silica, an alumina sol, and titanium oxide.

The cellulose nanocrystal composite dispersion liquid can be used as an aqueous dispersion liquid. Alternatively, it can be prepared as a dispersion liquid prepared by solvent substitution, which contains a dispersion medium other than water, namely, a protic polar solvent having a dielectric constant (25°C) of not less than 15 and less than 80, such as an alcohol. The dispersion liquid can be used as a diluent or the like for a hydrophobic resin.

The solvent substitution can be conducted as follows. The cellulose nanocrystal composite aqueous dispersion liquid is subjected to dehydration by using a centrifuge or filtration using a filter so as to remove moisture in the aqueous dispersion liquid, and then, mixed with a protic polar solvent. After the solvent substitution, the nanocellulose is dispersed in the protic polar solvent by the substantially same method for the dispersion, thereby preparing a cellulose nanocrystal composite dispersion liquid.

### (Product)

The cellulose nanocrystal composite dispersion liquid of the present invention, which is prepared by the aforementioned method, has by itself gas-barrier properties derived from a dense self-assembled structure of the cellulose nanocrystal composite. Products such as a film or a sheet can be obtained from the dispersion liquid imparted with functions like an antibacterial property derived from the fine metal particles. The dispersion liquid, which is prepared by dispersing the cellulose nanocrystal composite of the present invention in the protic polar solvent, has affinity even to a hydrophobic resin, and further the solvent can be removed efficiently by drying or heating in a short time. As a result, a product can be formed efficiently from the dispersion liquid.

### [Product comprising mixture with polyvalent cationic resin]

As mentioned above, the cellulose nanocrystal composite dispersion liquid of the present invention can be used alone to form a product. Alternatively, by forming a layer of the cellulose nanocrystal composite dispersion liquid on a layer of a polyvalent cationic resin, it can be formed as a product of a mixture in a mixed state to exhibit adhesion to a substrate. Namely, it is possible to form a product comprising a mixture of the polyvalent cationic resin and the cellulose nanocrystal composite in a state of maintaining the aforementioned self-assembled structure of the cellulose nanocrystal. In this product, the nanocellulose and the polyvalent cationic resin are present from the vicinity of the outermost surface to the innermost surface (e.g., a substrate direction when the product is formed on a substrate made of a thermoplastic resin) .

The polyvalent cationic resin used in the product of the present invention is a resin containing a water-soluble or water-dispersible polyvalent cationic functional group. Examples of the polyvalent cationic resin include: water-soluble amine polymers such as polyethyleneimine, polyallylamine, polyamine polyamide-epichlorohydrin, and polyamine epichlorohydrin; polyacrylamide; poly(diallyldimethylammonium salt); dicyandiamide formalin; poly(meth)acrylate; cationized starch; cationized gum; gelatin; chitin; and chitosan. Among them, a water-soluble amine and/or an amino group containing polymer, particularly polyethyleneimine, can be suitably used.

The polyvalent cationic resin containing solution preferably contains the polyvalent cationic resin in an amount of 0.01 to 30% by mass, particularly 0.1 to 10% by mass, in terms of the solid content. When the amount of the polyvalent cationic resin is smaller than the range, unlike the case where the polyvalent cationic resin is within the range, the interfacial peeling strength cannot be improved. Even when the amount of the polyvalent cationic resin is larger than the range, the interfacial peeling strength cannot be further improved, and this may degrade not only the economic performance but the coating applicability and the film formability.

Examples of the solvent used in the polyvalent cationic resin containing solution include: water; alcohols such as methanol, ethanol, and isopropanol; ketones such as 2-butanone and acetone; aromatic solvents such as toluene; and, a mixed solvent of water and any of these components.

The coating amount of the polyvalent cationic resin containing solution is determined according to the concentration of the solution containing the polyvalent cationic resin in terms of the solid content of cellulose nanocrystal composite in the layer formed from the cellulose nanocrystal composite dispersion liquid. That is, when 1.0 g/m² of the cellulose nanocrystal composite (solid content) is contained as described above, the solution is preferably coated so that 0.01 to 2.0 g/m² of the polyvalent cationic resin is contained. When the amount of the polyvalent cationic resin is less than the range, it may be impossible to improve the interfacial peeling strength to the hydrophobic substrate material such as a polyester resin unlike the case where the amount is within the range. Even when the amount of the polyvalent cationic resin exceeds the range, the interfacial peeling strength may not be improved further, resulting in poor economic efficiency.

Examples of coating method include spray coating, immersion, or coating with a bar coater, a roll coater, a gravure coater, a spin coater, human fingers or the like, though the present invention is not limited to these examples. The coated film is preferably dried under conditions at a temperature of 5 to 200°C and for 0.1 seconds to 24 hours. The drying treatment can be conducted by oven drying, infrared heating, high-frequency heating or the like. Alternatively, natural drying can be employed.

The cellulose nanocrystal composite is contained in the dispersion liquid preferably in an amount of 0.01 to 10% by mass, particularly 0.1 to 5.0% by mass, in terms of the solid content. When the content is less than the range, the effects imparted by the contained cellulose nanocrystal composite may be inferior as compared with the case where the content is within the range. When the content exceeds the range, the coating applicability, coatability and the film formability may become inferior as compared with the case where the content is within the range.

The cellulose nanocrystal composite dispersion liquid may be an aqueous dispersion liquid, or the solvent may be composed of the protic polar solvent alone. Alternatively, the solvent may be a mixture with ketones such as 2-butanone and acetone, or aromatic solvents such as toluene.

It is preferable that the cellulose nanocrystal composite dispersion liquid is coated so that the content of the cellulose nanocrystal composite (solid content) will be 0.1 to 3.0 g/m².

The coating and drying of the cellulose nanocrystal composite dispersion liquid can be conducted in a manner similar to the method of coating and drying the polyvalent cationic resin containing solution. An aqueous dispersion liquid preferably is dried under conditions of a temperature in a range of 5 to 200°C for 1 second to 24 hours. A protic polar solvent, such as ethanol, preferably is dried under conditions of a temperature in a range of 5 to 200°C for 1 second to 24 hours.

It is also possible to produce a laminate including a substrate on which a product comprising a mixture of the cellulose nanocrystal composite and the polyvalent cationic resin is formed. This laminate can be formed by coating on a substrate of a thermoplastic resin a solution containing a polyvalent cationic resin and drying the solution, and subsequently coating and drying a cellulose nanocrystal composite dispersion liquid. Alternatively, the polyvalent cationic resin containing solution and the cellulose nanocrystal composite dispersion liquid are coated and dried respectively in this order, thereby forming a cast film.

For the substrate, conventionally-known thermoplastic resins or a resin containing a hydroxyl group and/or a carboxyl group can be used, and the examples include polyolefin, polyester, polyamide, polyvinyl alcohol, polystyrene, and acrylic resins. Examples of the product include a film, a sheet, or products such as a bottle, a cup, a tray, or a pouch, which is manufactured by any process such as lamination molding, extrusion molding, injection molding, blow molding, stretch blow molding, or press molding.

### Examples:

Examples of the present invention will be described below. It should be noted that these Examples are simply a part of the present invention, and the present invention is not limited to these Examples. Methods for preparation and measurement for the respective items are described below.

### <Content of anionic functional group>

A dispersion liquid of cellulose nanocrystal or cellulose nanofiber was weighed, to which ion-exchanged water was added to prepare 100 ml of 0.05 to 0.3 mass% cellulose nanocrystal or cellulose nanofiber dispersion liquid. Further, 0.1 g of cation-exchange resin was added thereto and stirred. Later, filtration was conducted to separate the cation-exchange resin from the cellulose nanocrystal or cellulose nanofiber dispersion liquid. A 0.05 mol/L sodium hydroxide solution was added dropwise to the cation-exchanged dispersion liquid using an automatic potentiometric titrator (manufactured by Kyoto Electronics Manufacturing Co., Ltd.) to measure the change in electrical conductivity exhibited by the cellulose nanocrystal or cellulose nanofiber dispersion liquid. The amount of the titrated sodium hydroxide consumed for neutralization of the anionic functional group was determined from the obtained conductivity curve, from which the content of the anionic functional group (mmol/g) was calculated using the following formula (1).

Anionic functional group content (mmol/g) = Amount of titrated sodium hydroxide (ml) consumed for neutralization of anionic functional group × Concentration of sodium hydroxide (mmol/ml) / Solid mass of cellulose nanocrystal or cellulose nanofiber (g) (1)

### <Preparation of hydrophilized cellulose nanocrystal dispersion liquid>

### <Example 1>

A phosphoric acid solution was prepared by dissolving 2.4 g of urea and 1 g of ammonium dihydrogen phosphate in 3 g of ion-exchanged water. To this phosphoric acid solution, 2 g (solid content) of cellulose nanocrystal prepared by decomposing pulp with 64% by mass of sulfuric acid was added for the purpose of conducting a dispersion treatment. The cellulose nanocrystal dispersion liquid was heated to evaporate at 165°C for 15 minutes using a multiple safety dryer (manufactured by Futaba Science Co., Ltd.), so that the cellulose nanocrystal was hydrophilized. Later, 100 ml of ion-exchanged water was added to conduct a dispersion treatment, which was then washed using an ultracentrifuge (50,000 rpm, 10 minutes) . Ion-exchanged water and a sodium hydroxide solution were further added to adjust pH to 12, which was then washed to adjust pH to 8 using an ultracentrifuge (50,000 rpm, 10 minutes) while further adding ion-exchanged water. It was then introduced into the interior of a dialysis membrane (manufactured by Spectrum Laboratories P.L.C., fractionated molecular weight: 3500 to 5000D), allowed to stand in the ion-exchanged water so as to remove impurities and the like, thereby preparing a hydrophilized cellulose nanocrystal dispersion liquid. Ion-exchanged water was added to the purified hydrophilized cellulose nanocrystal dispersion liquid to conduct a dispersion treatment, thereby obtaining a hydrophilized cellulose nanocrystal dispersion liquid containing 1% by mass of hydrophilized cellulose nanocrystal (solid content). The anionic functional group content of the hydrophilized cellulose nanocrystal was 0.8 mmol/g.

### <Preparation of cellulose nanocrystal composite>

5 ml of the hydrophilized cellulose nanocrystal dispersion liquid, which contains 1% by mass of the hydrophilized cellulose nanocrystal (solid content), was collected. A 8 mmol/L silver nitrate aqueous solution was added to the dispersion liquid and stirred. Later, 16 mmol/L sodium borohydroxide was added thereto and stirred, so that silver ions were reduced and silver fine particles were supported on the hydrophilized cellulose nanocrystal, whereby a cellulose nanocrystal composite was prepared.

### <Example 2>

### <Preparation of hydrophilized cellulose nanocrystal dispersion liquid>

Cellulose nanocrystal was prepared by decomposing pulp with 64 wt% sulfuric acid, and 1 g (solid content) of the cellulose nanocrystal was dispersed in 5 ml of N,N-dimethylformamide to prepare a cellulose nanocrystal dispersion liquid. 10 mmol of 1-ethyl-3-(3-diethylaminopropyl)carbodiimide hydrochloride (manufactured by Tokyo Chemical Industry Co., Ltd.) was dissolved in another 5 ml of N,N-dimethylformamide to make a solution, and the solution was added to the cellulose nanocrystal dispersion liquid to be dispersed in 5 minutes. Subsequently, 10 mmol of sulfuric acid was dispersed in another 5 ml of N,N-dimethylformamide to prepare a dispersion liquid, and the liquid was introduced slowly into the cellulose nanocrystal dispersion liquid, and the cellulose nanocrystal was subjected to a hydrophilization treatment while being stirred at 0°C for 60 minutes, thereby preparing a hydrophilized cellulose nanocrystal dispersion liquid. After adding ion-exchanged water and sodium hydroxide solution, the hydrophilized cellulose nanocrystal dispersion liquid was introduced into the interior of a dialysis membrane (manufactured by Spectrum Laboratories P.L.C., fractionated molecular weight: 3500 to 5000D) and allowed to stand in ion-exchanged water to remove impurities and the like, thereby preparing the hydrophilized cellulose nanocrystal dispersion liquid. Ion-exchanged water was added to the purified hydrophilized cellulose nanocrystal dispersion liquid, and the liquid was subjected to a dispersion treatment with a mixer, whereby a hydrophilized cellulose nanocrystal dispersion liquid containing 1% by mass of hydrophilized cellulose nanocrystal (solid content) was obtained. The anionic functional group content of the hydrophilized cellulose nanocrystal was 0.7 mmol/g. This dispersion liquid was later treated in the manner similar to Example 1 so as to reduce the silver ions, whereby a cellulose nanocrystal composite comprising silver fine particles supported on the hydrophilized cellulose nanocrystal was prepared.

### <Example 3>

An aqueous dispersion liquid containing 10 g of cellulose nanocrystal (solid content) was prepared by decomposing pulp with 64 mass% sulfuric acid. To this dispersion liquid, 0.8 mmol of TEMPO catalyst (manufactured by Sigma Aldrich Co., LLC) and 12.1 mmol of sodium bromide were added, to which ion-exchanged water was further added for filling a 1L volumetric flask, and the liquid was stirred to be uniformly dispersed. Later, 5 mmol of sodium hypochlorite was added to initiate an oxidation reaction. During the reaction, the pH in the system was kept in a range of 10.0 to 10.5 with 0.5 N sodium hydroxide aqueous solution, and a hydrophilization treatment was conducted while stirring at 30°C for 4 hours. The thus hydrophilized cellulose nanocrystal was washed using an ultracentrifuge (50000 rpm, 10 minutes) while adding ion-exchanged water until the pH reached 8. Thereafter, it was placed in the interior of a dialysis membrane (manufactured by Spectrum Laboratories P.L.C., fractionated molecular weight: 3500 to 5000D) and allowed to stand in ion-exchanged water to remove impurities and the like, thereby preparing the hydrophilized cellulose nanocrystal dispersion liquid. Ion-exchanged water was added to the purified hydrophilized cellulose nanocrystal dispersion liquid and a dispersion treatment was conducted, whereby a hydrophilized cellulose nanocrystal dispersion liquid containing 1% by mass of hydrophilized cellulose nanocrystal (solid content) was obtained. The anionic functional group content of the hydrophilized cellulose nanocrystal was 0.9 mmol/g. This dispersion liquid was later treated in the manner similar to Example 1 so as to reduce the silver ions, whereby a cellulose nanocrystal composite comprising silver fine particles supported on the hydrophilized cellulose nanocrystal was prepared.

### <Comparative Example 1>

Pulp was decomposed with 64 mass% sulfuric acid to prepare a cellulose nanocrystal. The cellulose nanocrystal (1 g in terms of solid content) was added to ion-exchanged water and dispersed to obtain a cellulose nanocrystal dispersion liquid containing 1% by mass of cellulose nanocrystal (solid content) . The anionic functional group content of the cellulose nanocrystal was 0.1 mmol/g. This dispersion liquid was later treated in the manner similar to Example 1 so as to reduce the silver ions, whereby a cellulose nanocrystal composite comprising silver fine particles supported on the cellulose nanocrystal was prepared.

### <Comparative Example 2>

An aqueous dispersion liquid containing 10 g of craft pulp (solid content) was prepared. To this dispersion liquid, 0.8 mmol of TEMPO catalyst (manufactured by Sigma Aldrich Co., LLC) and 12.1 mmol of sodium bromide were added, to which ion-exchanged water was further added for filling a 1L volumetric flask, and the liquid was stirred to be uniformly dispersed. To the reaction system, sodium hypochlorite (15 mmol per gram of the cellulose) was added to initiate an oxidation reaction. During the reaction, the pH in the system was kept in a range of 10.0 to 10.5 with 0.5 N sodium hydroxide aqueous solution, and a hydrophilization treatment was conducted at 30°C for 4 hours. The cellulose oxide was thoroughly washed using a high-speed cooling centrifuge (16500 rpm, 10 minutes) while adding ion-exchanged water until it got neutralized. Water was added to the washed cellulose oxide so that the content of the cellulose oxide would be 1% by mass, and a defibration treatment was conducted using a mixer (7011JBB, OSAKA CHEMICAL Co., Ltd.) so as to prepare a cellulose nanofiber dispersion liquid containing carboxyl groups. This dispersion liquid was later treated in the manner similar to Example 1 so as to reduce the silver ions, whereby a cellulose nanofiber composite comprising silver fine particles supported on the carboxyl groups of the cellulose nanofiber was prepared.

### <Comparative Example 3>

8 mmol / L of a silver nitrate aqueous solution was added to 5 ml of ion-exchanged water, and the mixture was stirred. Later, 16 mmol/L of sodium borohydride was added thereto and stirred, whereby silver ions were reduced to prepare a silver fine particle dispersion liquid.

### <Total light transmittance>

The total light transmittance (%T) at 750 nm for the dispersion liquids each containing 1% by mass of cellulose nanocrystal composite, cellulose nanofiber composite, or fine particles prepared in Examples 1-3 or Comparative Examples 1-3 was determined using a spectrophotometer (UV-3100PC, supplied by Shimadzu Corporation).

### <Viscosity measurement>

The viscosity (mPa·S) for the 1 mass% cellulose nanocrystal composite or cellulose nanofiber composite each prepared in Examples 1-3 or Comparative Examples 1-3 was determined using a rotational viscometer (VISCO, supplied by ATAGO CO., LTD.), while increasing the rotational frequency of the spindle from 2.5 to 250 rpm, and then decreasing to 3 rpm.

### <Observation of silver fine particles after spin coating>

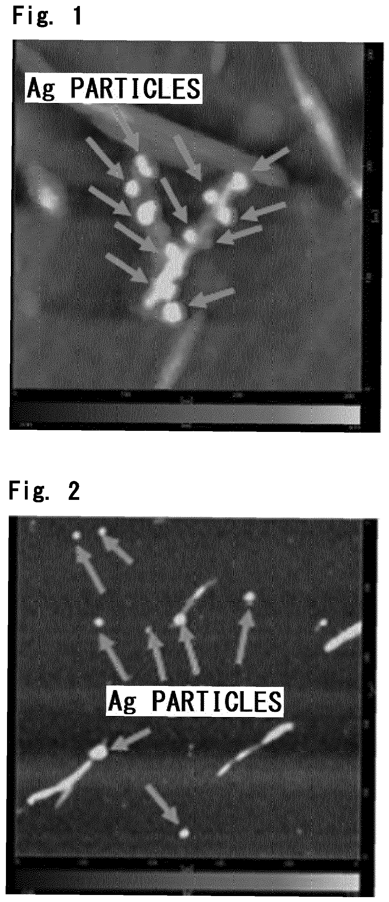

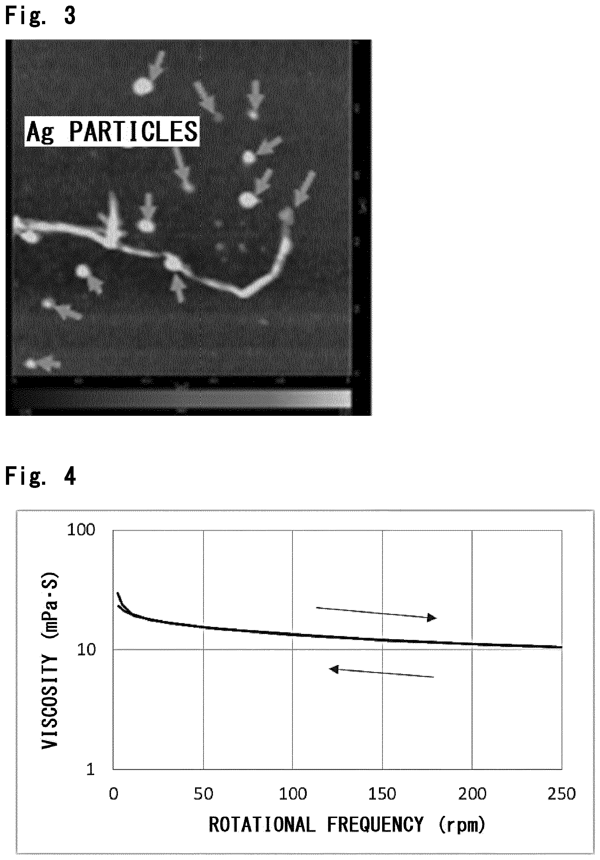

The cellulose nanocrystal composite or the cellulose nanofiber composite in Example 1 or Comparative Examples 1, 2 was spread on silicon wafer and spin-coated. For these composites, the silver fine particles were observed using SPM (AFM5300E supplied by Hitachi High-Tech Science). The observation was carried out in DFM-mode using a probe made of Si (equivalent to spring constant of 9 N/m). The results are shown in Figs. 1-3.

### <Product formed of mixture with polyvalent cationic resin>

Here, a corona-treated substrate of a biaxially-stretched PET film (Lumirror P60, 12 µm, manufactured by Toray Industries, Inc.) was used. On this substrate, polyethyleneimine (PEI) (EPOMIN P-1000, manufactured by Nippon Shokubai Co., Ltd.) was coated with a bar coater so that the solid content would be 0.6 g/m². It was dried to be solidified at 50°C for 10 minutes by a hot air dryer (MSO-TP, manufactured by ADVANTEC CO., LTD.) . Each of the dispersion liquids of the cellulose nanocrystal composite, the cellulose nanofiber composite or the silver fine particles prepared in Examples 1-3 and Comparative Examples 1-3 was coated on the solidified polyethyleneimine using a bar coater (#40), and then, dried at 25°C for 24 hours, thereby preparing a product of a mixture with the polyvalent cationic resin.

### <Antimicrobial activity calculated by antimicrobial test>

The products produced from the dispersion liquids of the cellulose nanocrystal composites, the cellulose nanofiber composites or the silver fine particles in Examples 1-3 or Comparative Examples 1-3 were subjected to a test for antibacterial activity based on the film close-contact method in 5. test method of JIS Z 2801:2012 "Antibacterial products - test for antibacterial activity and efficacy", thereby calculating antibacterial activities with regard to the test bacteria. For the test bacteria, staphylococcus aureus or Escherichia coli was used.

**[Table 1]**

| | | Example 1 | Example 2 | Example 3 | Comparative Example 1 | Comparative Example 2 | Comparative Example 3 |
|---|---|---|---|---|---|---|---|
| Support for fine metal particles (nanocellulose) | Materials | CNC* | CNC* | CNC* | CNC* | Pulp | - |
| | Hydrophilization treatment | Phosphorylation | Sulfation | TEMPO catalyst oxidation | - | TEMPO catalyst oxidation | - |
| | Anionic functional group | Sulfuric acid group and/or sulfo group + phosphoric acid group | Sulfuric acid group and/or sulfo group | Sulfuric acid group and/or sulfo group + carboxyl group | Sulfuric acid group and/or sulfo group | Carboxyl group | - |
| | Anionic functional group content (mmol/g) | 0.8 | 0.7 | 0.9 | 0.1 | 1.5 | - |
| Composite | Transmittance (%T) | 53.1 | 83.4 | 59.6 | 35.6 | 43.4 | 12.9 |
| | Thixotropy | Substantially no | Substantially no | Substantially no | Substantially no | Yes (greatly) | Substantially no |
| | Fine particle diameter (nm) | 5-20 | 5-20 | 5-20 | 5-20 | 5-20 | 30-100 aggregates |
| Product | Antibacterial activity (staphylococcus aureus) | 4.5≤ | 4.5≤ | 4.5≤ | 4.5≤ | 4.5≤ | 4.3≤ |
| | Antibacterial activity (E. coli) | 5.6≤ | 5.6≤ | 5.6≤ | 5.6≤ | 5.6≤ | 5.6≤ |

| | | | | | | | |
|---|---|---|---|---|---|---|---|
| *1 Cellulose nanocrystal (derived from sulfuric acid decomposition) | | | | | | | |

### Industrial Applicability:

In the cellulose nanocrystal composite of the present invention, the fine metal particles are supported efficiently and stably on the cellulose nanocrystal. Therefore, the cellulose nanocrystal composite can be provided as a dispersion liquid in which the fine metal particles that may easily aggregate are dispersed uniformly. In addition, since the thickening and thixotropy of the dispersion liquid is prevented or decreased, the handleability such as coating applicability and application touch is excellent. Since a protic polar solvent like an alcohol can be used as the dispersion medium, affinity to a hydrophobic resin is also imparted. As a result, the cellulose nanocrystal composite can be applied to such a hydrophobic resin, and thus, the product can be imparted efficiently with functions like antibacterial activity possessed by the fine metal particles.

## Claims

1. A cellulose nanocrystal composite containing a sulfuric acid group and/or a sulfo group and an anionic functional group, and supporting fine metal particles, wherein the total amount of the sulfuric acid group and/or the sulfo group and the anionic functional group is more than 0.17 mmol/g and not more than 4.0 mmol/g.

2. The cellulose nanocrystal composite according to claim 1, wherein the sulfuric acid group and/or the sulfo group is a sulfuric acid group and/or a sulfo group derived from a sulfuric acid treatment of cellulose nanocrystal.

3. The cellulose nanocrystal composite according to claim 1 or 2, wherein the anionic functional group is at least one of a sulfuric acid group and/or a sulfo group derived from a hydrophilization treatment, a phosphoric acid group or a carboxyl group.

4. The cellulose nanocrystal composite according to claim 3, wherein the anionic functional group is a sulfuric acid group and/or a sulfo group, or a phosphoric acid group.

5. The cellulose nanocrystal composite according to any one of claims 1 to 4, wherein the cellulose nanocrystal has a fiber width of not more than 50 nm, a fiber length of not more than 500 nm, and crystallinity of not less than 60%.

6. A cellulose nanocrystal composite dispersion liquid comprising the cellulose nanocrystal composite according to any one of claims 1 to 5, wherein the cellulose nanocrystal composite is in a state dispersed in a protic polar solvent.

7. The cellulose nanocrystal composite dispersion liquid according to claim 6, wherein the dispersion liquid containing 1 mass% of cellulose nanocrystal composite has a viscosity of not more than 1000 mPa·S at 20°C and a rotational frequency of 2.5 rpm.

8. A product comprising the cellulose nanocrystal composite according to any one of claims 1 to 5.

9. A method for producing a cellulose nanocrystal composite, the method comprising:
treating a cellulose material with sulfuric acid to prepare cellulose nanocrystal containing a sulfuric acid group and/or a sulfo group;
subjecting the cellulose nanocrystal to a hydrophilization treatment to prepare cellulose nanocrystal containing a sulfuric acid group and/or a sulfo group and an anionic functional group; and
allowing the cellulose nanocrystal to support fine metal particles.

10. The method for producing nanocellulose according to claim 9, wherein the hydrophilization treatment is a never-dry process or a treatment using any one of carbodiimide, sulfuric acid, a sulfur trioxide-pyridine complex, or phosphoric acid-urea.
